# EUROPÄISCHE PATENTSCHRIFT

(11) **EP 1 433 034 B1**
(45) Veröffentlichungstag und Bekanntmachung des Hinweises auf die Patenterteilung: **07.05.2008**
(21) Anmeldenummer: 02777061.9
(22) Anmeldetag: 11.09.2002
(51) Int. Cl.: G05B 19/418, G05B 19/042

(54) **VERFAHREN ZUR SICHERUNG DES DATENAUSTAUSCHS ZWISCHEN EINER EXTERNEN ZUGRIFFSEINHEIT UND EINEM FELDGERÄT**
METHOD FOR SECURING THE EXCHANGE OF DATA BETWEEN AN EXTERNAL ACCESS UNIT AND A FIELD DEVICE
PROCEDE POUR SECURISER UN ECHANGE DE DONNEES ENTRE UNE UNITE D'ACCES EXTERNE ET UN APPAREIL DE TERRAIN

(30) Priorität: 12.09.2001 DE 10144971
(43) Veröffentlichungstag der Anmeldung: 30.06.2004
(73) Patentinhaber: Endress + Hauser Process Solutions AG, 4153 Reinach BL (CH)
(72) Erfinder: GRITTKE, Udo, 79585 Steinen (DE); SEILER, Christian, 79424 Auggen (DE)
(74) Vertreter: Andres, Angelika Maria
(86) Internationale Anmeldenummer: PCT/EP2002/010186
(87) Internationale Veröffentlichungsnummer: WO 2003/023541

(56) Entgegenhaltungen:
- EP-A- 0 495 397
- EP-A- 1 045 302
- WO-A-00/77592
- WO-A-01/30022
- US-A- 4 335 591
- US-A- 5 404 288
- US-A- 6 067 477
- US-B1- 6 223 287
- ANONYMOUS: "Sipart DR20 Controllers" SIEMENS MP31 - 1998 , [Online] 31. Dezember 1998 (1998-12-31), Seiten 4/1-4/16, XP002260849 Gefunden im Internet: <URL:http://www.altavista.nl> [gefunden am 2003-11-10]

## Beschreibung

Die Erfindung bezieht sich auf ein Verfahren zur Sicherung der Datenkommunikation via Weitverkehrs-Anwedernetze (WAN) und Lokale Anwendernetze (LAN), z.B. Internet zwischen zumindest einer externen Zugriffseinheit und einem Feldgerät zur Bestimmung bzw. Überwachung zumindest einer physikalischen oder chemischen Prozeßgröße bzw. zwischen zumindest einer entfernten Zugriffseinheit und einer zentralen Daten-erfassungs- /Steuereinheit zur Datenerfassung/Steuerung einer Vielzahl von Feldgeräten, welche zur Bestimmung bzw. Überwachung von zumindest einer physikalischen oder chemischen Prozeßgröße dienen. Bei der Prozeßgröße handelt es sich beispielsweise um den Füllstand eines Mediums in einem Behälter, um den Druck, die Temperatur, den Durchfluß, die Leitfähigkeit oder den pH-Wert eines Mediums.

In der Prozeßleittechnik werden üblicherweise eine Vielzahl von Feldgeräten zur Bestimmung einzelner Prozeßgrößen und zur Überwachung der Verfahrensabläufe in einem Prozeß eingesetzt. Die Steuerung der Feldgeräte und der Aktoren erfolgt über eine zentrale Datenerfassungs-/Steuereinheit bzw. über ein Leitsystem. Als Beispiel für eine zentrale Datenerfassungs-/Steuereinheit sei an dieser Stelle eine Einheit genannt, die von der Firma Endress+Hauser unter der Bezeichnung 'Tank Side Monitor' vertrieben wird. Das Leitsystem ist über einen Datenbus mit den einzelnen Feldgeräten und Aktoren verbunden. Über den Datenbus werden alle für die Prozeßsteuerung bzw. die Prozeßüberwachung notwendigen Daten zwischen dem Leitsystem und den einzelnen Feldgeräten/Aktoren ausgetauscht. Ein für industrielle Anwendungen vielfach eingesetzter Datenbus arbeitet beispielsweise nach dem HART-Standard. Als Feldbusse werden aber auch Profibus PA und Fieldbus Foundation FF eingesetzt.

Neben der reinen Meßwertübertragung erlauben Feldgeräte auch die Übertragung von verschiedenen im Feldgerät abgespeicherten Informationen, wie z.B. Parameter-Informationen (Nullpunkt, Meßwertspanne, etc.), Meß-kurven und Meßdaten und Diagnose-Informationen.

Vor der Erst-Inbetriebnahme muß ein Feldgerät üblicherweise konfiguriert und parametriert werden. Die für die Konfigurierung und Parametrierung erforderlichen Bedien- und Beobachtungsprogramme laufen meist auf Rechnerein-heiten (PCs, Laptops), die über eine serielle COM-Schnittstelle, üblicherweise eine serielle Schnittstelle RS 232, mit einem an den Feldbus/Datenbus angeschlossenen Adapter verbunden sind. Auf dem Markt erhältliche Bedien- und Beobachtungsprogramme werden beispielsweise von der Anmelderin unter der Bezeichnung CommuWin angeboten und verkauft. Ein weiteres Bedien- und Beobachtungsprogramm wird von der Firma Endress+Hauser Wetzer unter der Bezeichnung ReadWin vertrieben.

Nachteilig bei den o. g. Bedien- und Beobachtungsprogrammen ist, daß sie nur in unmittelbarer Nähe zum Datenbus/Feldbus eingesetzt werden können. Um von jeder beliebig entfernten Stelle Zugriff auf das Feldgerät bzw. die Datenerfassungs-/Steuereinheit haben zu können, ist es darüber hinaus bereits bekannt geworden, spezielle Anwendungsprogramme zu verwenden, die über eine Internet-Schnittstelle aufs Internet zugreifen und über entsprechende Gateways die Verbindung zu dem Feldbus bzw. dem Datenbus schaffen (siehe Z.B. Dokument WO 00/77592). Eine derartige Lösung ist relativ teuer und daher für eine breite Anwendung wenig geeignet.

Eine sehr vorteilhafte bekannt gewordene Lösung schlägt vor, das Bedien- und Beobachtungsprogramm auf eine serielle Schnittstelle zugreifen zu lassen. In diesem Fall 'sieht' das Bedien- und Beobachtungsprogramm nicht, ob die Verbindung zum Feldgerät über eine RS 232-Schnittstelle oder über das WAN, LAN (z. B Internet) erfolgt. In einer ersten Ausgestaltung ist die Verbindung zwischen dem Bedien- und Beobachtungsprogramm und der Internet-Schnittstelle über eine erste COM-Schnittstelle, ein Nullmodem-Kabel und eine zweite COM-Schnittstelle realisiert. Alternativ kann die Verbindung zwischen dem Bedien- und Beobachtungsprogramm und der Internet-Schnittstelle über eine virtuelle serielle Schnittstelle erfolgen. Diese Ausgestaltung erfordert zwar einen höheren Programmieraufwand als die an erster Stelle genannte Hardware-Lösung. Ihr Pluspunkt ist jedoch, daß sie auch bei z. B. einem Laptop einsetzbar ist, der keine zwei physikalisch vorhandene serielle Schnittstellen hat.

Der Zugriff auf ein Feldgerät über das Internet birgt jedoch die Gefahr, daß Unberechtigte (Hacker) Manipulationen an dem Feldgerät bzw. an dem Leitsystem vornehmen können, sobald sie den Password-Schutz geknackt haben. Eine Lösung, die diese Gefahr des manipulativen Eingriffs auf das Feldgerät bzw. die Prozeßanlage nicht effektiv reduziert oder völlig eliminiert, ist für den Betreiber eines Feldgeräts bzw. der Prozeßanlage aus verständlichen Gründen indiskutabel.

Der Erfindung liegt die Aufgabe zugrunde, ein Verfahren vorzuschlagen, das unerlaubte Zugriffe auf ein Feldgerät bzw. eine Datenerfassungs-/Steuer-einheit im Feld mit hoher Wahrscheinlichkeit ausschließt.

Die Aufgabe wird dadurch gelöst, daß der Betreiber des Feldgeräts bzw. der zentralen Datenerfassungs-/Steuereinheit der externen Zugriffseinheit gezielt Zugriffe auf das Feldgerät bzw. die zentrale Datenerfassungs-/Steuereinheit einräumt. Vorzugsweise sind diese Zugriffe nur temporär erlaubt.

Gemäß einer vorteilhaften Weiterbildung des erfindungsgemäßen Verfahrens ist vorgesehen, daß verschiedene Varianten von Zugriffsberechtigungen vorgegeben sind; der Betreiber des Feldgeräts bzw. der zentralen Daten-erfassungs- /Steuereinheit hat die Möglichkeit, unter den verschiedenen Varianten von Zugriffsberechtigungen auszuwählen und gezielt an von ihm autorisierte Personen zu vergeben. Somit ist stets der von dem Betreiber autorisierte Sicherheitsstandard für Zugriffe auf das Feldgerät bzw. die Datenerfassungs-/Steuereinheit gewährleistet.
Weiterhin wird vorgeschlagen, daß die jeweils autorisierte Zugriffsberechti-gung hardwaremäßig und/oder softwaremäßig vergeben wird.

Beispielsweise werden Zugriffsberechtigungen zum Auslesen von Daten und/oder zum Konfigurieren und/oder Parametrieren eines Feldgeräts vergeben. Ein uneingschränkter Zugriff auf das Feldgerät bzw. die Daten-erfassungs-/Steuereinheit kann beispielsweise bedenkenlos im Rahmen von Feldtests oder bei dem Überprüfen eines Feldgerätes durch das Service-personal gegeben sein. Das Auslesen von Daten wird beispielsweise eingeräumt im Rahmen des sog. Supply Chain Management. Beispielsweise hat ein Lieferant Zugriff auf ein Füllstandsmeßgerät, das den Füllstand eines von ihm zu liefernden Füllguts in dem Behälter anzeigt. Oder es werden Emissionswerte an die Betreiber von Anlagen vermittelt und verkauft, deren Emissionswerte über den zulässigen Richtwerten liegen.

Gemäß einer bevorzugten Ausgestaltung des erfindungsgemäßen Verfahrens wird an dem Feldgerät bzw. der zentralen Datenerfassungs-/Steuereinheit von dem Betreiber des Feldgeräts bzw. des Feldbus - Adapter hardwaremäßig ein Betätigungselement aktiviert . Erst nachdem der Betreiber diesen Verfahrensschritt durchgeführt hat, ist es möglich, von einer externen Zugriffseinheit auf das Feldgerät bzw. den Feldbus - Adapter zuzugreifen.

Um eine zweifache Absicherung des Feldgeräts im Hinblick auf Manipulationen zu erreichen, ist ein externer Zugriff auf das Feldgerät bzw. die zentrale Datenerfassungs-/Steuereinheit nur möglich, wenn über die Zugriffseinheit zusätzlich zu der hardwaremäßigen Entriegelung noch ein vereinbartes Password genannt wird. Weiterhin ist der Zugriff auf das Feldgerät von der entfernten Zugriffseinheit aus nur während einer definierten Zeitspanne möglich, die beispielsweise mit der Aktivierung des zuvorge-nannten Betätigungselements gestartet wird. Es versteht sich von selbst, daß die doppelte Absicherung auch in umgekehrter Reihenfolge realisierbar ist.

Wie bereits gesagt, kann die externe Zugriffseinheit von dem Sevice-Personal bedient werden. Besonders vorteilhaft ist es jedoch, wenn auch einer Kontrollbehörde, beispielsweise dem Zoll, dem Finanzamt, einer Eichbehörde oder einer Umweltbehörde der Zugriff auf das Feldgerät bzw. den Feldbus - Adapter ermöglicht wird. Hierbei handelt es sich quasi um den Zugriff auf ein Feldgerät im öffentlichen Interesse. Durch den Zugriff auf das Gerät über Internet von einer beliebigen Stelle aus wird die Anreise und die Anwesenheit eines Inspektors vor Ort eingespart. Um Manipulationen des Betreibers an dem Feldgerät bzw. der Anlage auszuschließen, können entsprechende Sicherheitsmaßnahmen, z. B. ein elektronisches Verplomben des Feldgeräts oder ein hardwaremäßiges Verplomben des Feldgeräts vorgesehen sein. Beispielsweise wird eine unerlaubte Manipulation an einem verplombten Feldgerät der Behörde durch das Heraufsetzen eines Zählers angezeigt.

Die Erfindung wird anhand der nachfolgenden Zeichnungen näher erläutert. Es zeigt:
Fig. 1: eine schematische Darstellung eines Feldbusses mit mehreren Feldgeräten,
Fig. 2: eine schematische Darstellung einer Vorrichtung zur Durchführung des erfindungsgemäßen Verfahrens und
Fig. 3: ein Flußdiagramm zur Verdeutlichung des erfindungsgemäßen Verfahrens.

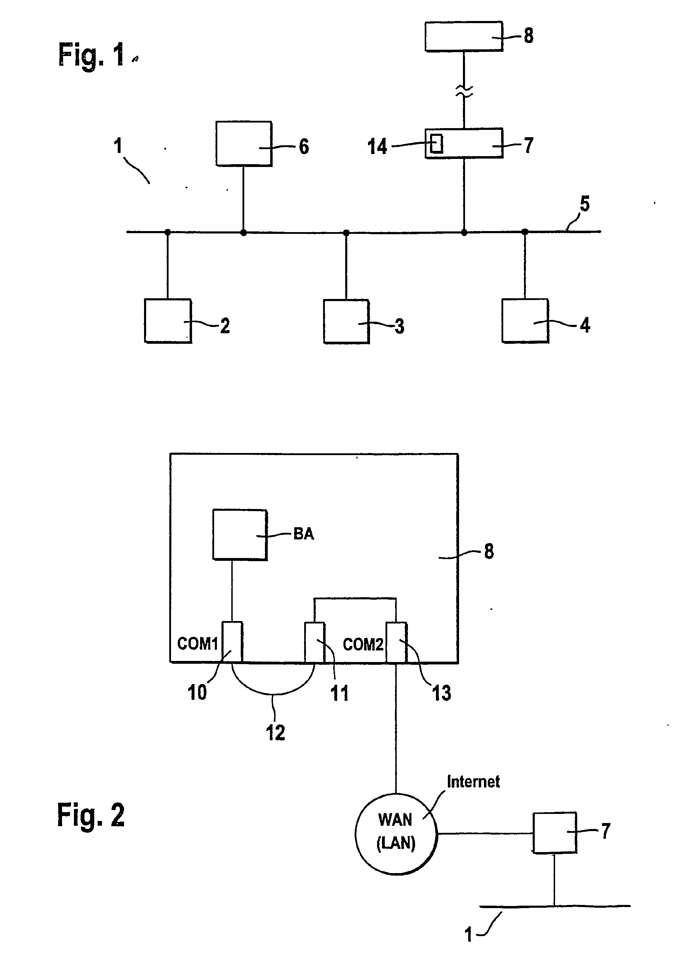

Die Figuren Fig. 1 und Fig. 2 zeigen schematisch die Komponenten einer Vorrichtung, die zur Durchführung des erfindungsgemäßen Verfahrens geeignet ist. In Fig. 1 ist ein bekannter Feldbus 1 mit mehreren angeschlossenen Feldgeräten 2, 3, 4 dargestellt. Der Feldbus 1 arbeitet nach einem der bekannten inter-nationalen Standards, wie z.B. HART®, Profibus® oder Foundation Fieldbus®.
Die Feldgeräte 2, 3, 4 sind über eine Datenbusleitung 5 mit einer Datenerfassungs-/Steuereinheit 6 bzw. einem Leitsystem verbunden. Der Feldbus-Adapter 7 ist via WAN, LAN (z. B. Internet) mit einer Rechnereinheit bzw. Zugriffseinheit 8 verbunden. Bei der Rechnereinheit 8 handelt es sich beispielsweise um einen Personal Computer (PC) oder um einen tragbaren Laptop.

Beispiele für Feldgeräte 2, 3, 4 sind z.B. Temperatur-Meßgeräte, die die Temperatur eines Prozeßmediums erfassen, Durchfluß-Meßgeräte, die den Durchfluß in einem Rohrleitungsabschnitt erfassen oder Füllstands-Meßgeräte, die den Füllstand eines Füllgutes in einem Behälter bestimmen.
Die Meßwerte werden über die Datenbusleitung 5 an das Leitsystem bzw. die Feldbus - Adapter 7 übertragen. Aufgrund der ermittelten Meßwerte steuert das Leitsystem 6 den gesamten Prozeßablauf.

Neben der reinen Meßwertübertragung erlauben intelligente Feldgeräte (smart field devices) auch die Übertragung von verschiedenen im Feldgerät abgespeicherten Informationen. So lassen sich verschiedene Parameter vom Leitsystem 6 bzw. von der Rechnereinheit 8 aus aufrufen bzw. verändern. Derartige Parameter sind z.B. der Nullpunkt, der Meßbereich (Spanne) oder die Einheit, in der die Meßwerte ausgegeben werden.

Weiterhin können etwa bei Füllstandsmeßgeräten, die nach dem Laufzeitverfahren arbeiten, zumindest Teile der Echokurve ausgelesen werden. Aus der Echokurve können Rückschlüsse auf die Funktionsfähigkeit des Füllstandsmeßgerätes getroffen werden. Entsprechende Füllstandsmeßgeräte werden übrigens von der Anmelderin unter der Bezeichnung Micropilot vertrieben. Daneben können auch Diagnoseinformationen abgerufen werden. Einige Feldgeräte 2, 3, 4 sind bereits in der Lage, eine Eigendiagnose durchzu-führen, d. h. es werden bestimmte Kenngrößen des Feldgerätes 2, 3, 4 auf Abweichungen vom Sollwert hin überwacht.

Zur Darstellung dieser Informationen und Änderung der Parameter dienen spezielle Bedien- und Beobachtungsprogramme. Diese Bedien- und Beobachtungsprogramme werden auf der Rechnereinheit 8 installiert.

Fig. 2 zeigt eine Ausgestaltung der erfindungsgemäßen Vorrichtung Die Rechnereinheit bzw. die Zugriffseinheit 8 weist eine erste COM-Schnittstelle 10 und eine zweite COM-Schnittstelle 11 auf. Die beiden Schnittstellen 10, 11 sind über ein Nullmodem-Kabel 12 miteinander verbunden. Die Rechner-einheit 8 weist eine WAN, LAN-Schnittstelle 13, die über das WAN, LAN (Internet) mit einem an den Feldbus 1 angeschlossenen Feldbus-Adapter 7 verbunden ist. Das Bedien- und Anwendungsprogramm greift in gewohnter Weise auf die COM1-Schnittstelle 10 der Rechnereinheit 8 zu. Über das Nullmodemkabel 12 und die COM2-Schnittstelle 12 erfolgt die Datenverbindung mit der WAN-, LAN-Schnittstelle 13. Die WAN-, LAN-Schnittstelle 13 sorgt mit dem entsprechenden Treiberprogramm (Bus-Client) für die Umsetzung der Daten auf TCP/IP Standard, sowie über ein gespeichertes Adreßbuch für die Auswahl der entsprechenden Internetadresse des Feldbus-Adapters 7. Über das WAN, LAN werden die Daten zwischen Rechnereinheit/Zugriffseinheit 8 und Feldbus-Adapter 7 ausgetauscht. Der Feldbus-Adapter 7 sorgt für die Umwandlung des Protokolls auf den entsprechenden Feldbus-Standard, z.B. HART®. Als weiterer Vorteil ist zu nennen, daß ohne ein mechanisches Umstecken, über die WAN-, LAN-Schnittstelle 13 unterschiedliche Feldbusse angesteuert werden können.

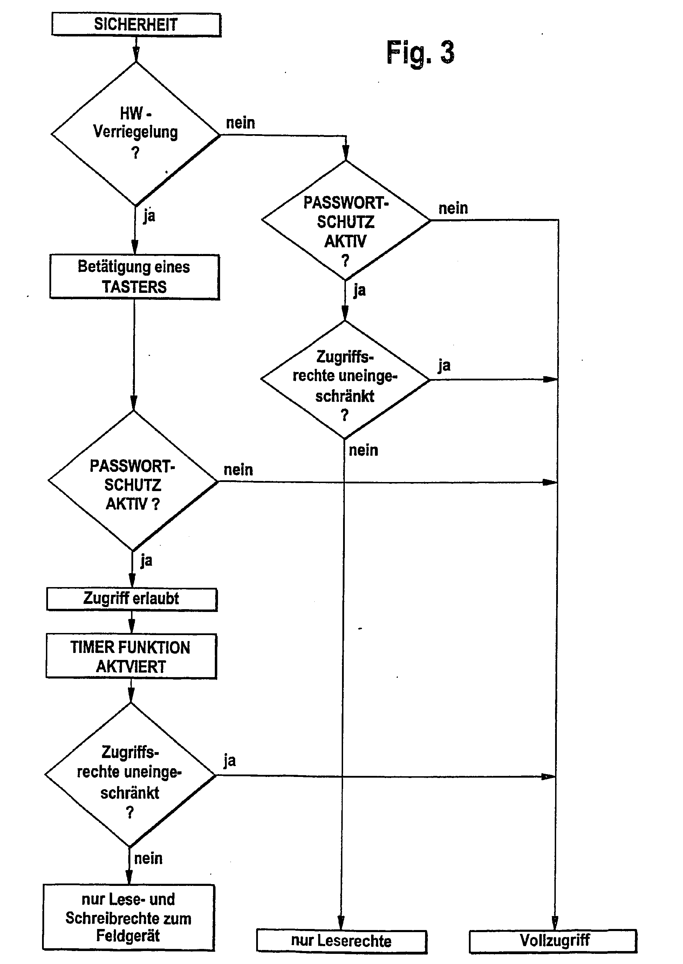

Fig. 3 zeigt ein Flußdiagramm, in welchem die vorteilhaften und wesentlichen Schritte des erfindungsgemäßen Verfahrens dargestellt sind. Prinzipiell hat es erfindungsgemäß der Betreiber der Anlage bzw. des Feldgeräts 1, 2, 3, 4 voll in der Hand, einen Zugriff auf ein Feldgerät 1, 2, 3, 4, über das WAN, LAN zu gestatten oder zu verhindern.

Die in der linken Bildhälfte gezeigten Verfahrensschritte charakterisieren quasi die höchste Sicherheitsstufe mit kombinierter Hardware- und Software-Verriegelung. Ein Zugriff auf das Gerät 1, 2, 3, 4 bzw. Feldbus - Adapter 7 über WAN, LAN (Internet) ist hiernach erst möglich, wenn der Betreiber z. B. einen Taster 14 betätigt hat. Zusätzlich kann ein Zugriff von der Zugriffs-einheit 8 nur erfolgen, wenn das vereinbarte Password genannt wird. Erst wenn beide Bedingungen erfüllt sind, ist der Zugriff auf das Feldgerät 1, 2, 3, 4 bzw. die Datenerfassungs-/Steuereinheit 8 erlaubt - wobei der Zugriff nur während einer voreingestellten oder vom Betreiber frei wählbaren Zeitspanne möglich ist. Die Zugriffsrechte selbst können eingeschränkt oder uneinge-schränkt vergeben werden: Entweder sind es reine Leserechte oder eine Kombiantion aus Lese- und Schreibrechten, wobei Schreibrechte beispielsweise Änderungen an den Parametern ermöglichen.

Im mittleren Zweig des Flußdiagramms ist eine weniger restriktive Variante des erfindungsgemäßen Verfahrens dargestellt. Hier ist auf die Hardware-Verriegelung verzichtet worden. Über eine Zugriffseinheit 8 kann der Zugriff auf das Feldgerät 1, 2, 3, 4 erfolgen, sobald das korrekte Password genannt worden ist. Wiederum können die Zugriffsrechte von dem Betreiber ganz gezielt an berechtigte Personen verteilt werden. Beispielsweise ist einem Lieferanten eines Füllguts, das in einem Behälter gespeichert ist, ein ständiges Leserecht eingeräumt. Hierdurch ist es dem Lieferanten möglich, den Füllstand des Füllguts zu überwachen und bei Bedarf das entsprechende Füllgut nachzuliefern. Als Stichwort sei in diesem Zusammenhang der Begriff 'Supply Chain Management' genannt.

Im rechten Teil des Flußdiagramms erlaubt der Betreiber des Feldgeräts 1, 2, 3, 4 bzw. den Feldbus - Adapter 7 einen uneingeschränkten Zugriff via WAN, LAN (Internet). Hier ist also weder eine Hardware- noch eine Software-Verriegelung vorgesehen. Sinnvoll ist eine derartige Variante beispielsweise während der Feldtestphase eines neuen Feldgeräts 1, 2, 3, 4.

Nach der Betätigung des Schalters 14 ist der Zugriff auf die Feldgeräte 2, 3, 4, bzw. Feldbus-Adapter 7 für eine gewisse Zeitspanne möglich. Dieses Sicherheitslevel bietet schon einen gewissen Schutz vor einem unerlaubten Zugriff auf die Geräte 2, 3, 4, 7.
Es ist nicht auszuschliessen, dass nach der Betätigung des Schalters 14 mehrer Zugriffe auf die Geräte erfolgen, von denen ev. einer unberechtigt ist. Um deshalb unberechtigte Zugriffe auszuschliessen, wird nur der erste Zugriff bzw. nur eine Verbindung nach der Schalterbetätigung erlaubt,
alle weiteren Zugriffe/Verbindungsversuche werden abgewiesen.
Es ist davon auszugehen, dass der erste Zugriff nach der Schalterbetätigung berechtigt ist. Sollte jedoch der erste Zugriff unberechtigt sein, so wird dies vom berechtigten Zugreifer unmittelbar bemerkt, da er abgewiesen wird. In diesem Fall kann der Berechtigte sofort Gegenmassnahmen einleiten.

Eine weiter Möglichkeit einer Zugriffsbereichtigung besteht darin, dass die externe Zugriffseinheit (8) eine vorgegebene IP-Adresse aufweisen muss. Somit ist der Zugriff nur von einer oder mehreren ausgewählten Zugriffseinheiten (8) möglich. Im Feldgerät 2, 3, 4 oder dem Feldbus-Adapter 7 ist eine TCPIIP-Schnittstelle vorgesehen auf die z.B. ein integrierter Webserver zugreift. Das nachfolgend beschriebene Verfahren basiert im wesentlichen auf der Netzwerkschicht (OSI Layer 3) der TCP/IP-Kommunikationssoftware.
Das Internet Protokoll IP implementiert bei TCP/IP die Funktionen der NetzwerkSchicht, es ist z.B. für die Adressierung, Pfadsuche und Segmentierung einzelner Datenpackete zuständig. Ein IP-Packet enthält unter anderem die Adresse des Absenders und des Empfängers des Packetes, die Internet Source Address und Internet Destination Address.

Ein spezielles Modul (folgend IP-Filter genannt) des Feldgerätes/Feldbus-Adapters soll nun so konfiguriert werden, dass nur bestimmte Absender eine Antwort vom Feldgerät/Feldbus-Adapter erhalten. Dazu werden die IP-Adressen der zugelassenen Absender z.B. in einer Tabelle abgespeichert. Die Einträge der Tabelle mit den zugelassenen Absender-IP-Adressen kann von einem System-Administrator mit vollständigen Zugriffsrechten editiert werden. Eine zusätzliche Sicherheit würde sich ergeben, wenn die Einträge der Tabelle nur von einem System-Administrator über eine Service-Schnittstelle des Gerätes vor Ort vorgenommen werden können. Empfängt das Feldgerät über eine beliebige Schnittstelle ein IP-Packet, untersucht zunächst der IP-Filter die Absender-Adresse und vergleicht diese mit den Einträgen in der Tabelle mit den zugelassenen IP-Adressen. Ist die Absender Adresse in der Tabelle enthalten wird das empfangene Packet weiterverarbeitet, ist die Adresse unbekannt, wird das Packet weggeworfen. Somit haben nur noch dem Feldgerät bekannte, sogenannte vertrauenswürdige Absender Zugriff, alle anderen erhalten keine Antwort.

Eine weitere Möglichkeit einer Zugriffsberechtigung besteht darin, dass der Datenaustausch zwischen Zugriffseinheit (8) und einem Feldgerät (1, 2, 3, 4) bzw. dem Feldbus-Adapter (7) verschlüsselt erfolgt. In vorteilhafter Weise wird hierfür das SSL-Verschlüsselungsverfahren eingesetzt.

In vorteilhafter Weise wird die IP-Adresse der Zugriffseinheit (8) abgespeichert. Dadurch ist eine spätere Identifizierung der Zugriffseinheit 8 möglich, von der aus der Zugriff auf ein Feldgerät (1, 2, 3, 4) bzw. den Feldbus-Adapter (7) erfolgte.

## Patentansprüche

1. Verfahren zur Sicherung der Datenkommunikation via WAN, LAN zwischen zumindest einer externen Zugriffseinheit (8) und einem Feldgerät (1; 2; 3; 4) zur Bestimmung bzw. Überwachung zumindest einer physikalischen oder chemischen Prozeßgröße bzw. zwischen zumindest einer entfernten Zugriffseinheit (8) und einem Feldbus-Adapter (7) zur Datenerfassung/Steuerung einer Vielzahl von Feldgeräten (1, 2, 3, 4), welche zur Bestimmung bzw. Überwachung von zumindest einer physikalischen oder chemischen Prozeßgröße dienen,
wobei der Betreiber des Feldgeräts (1; 2; 3; 4) bzw. des Feldbus - Adapters der externen Zugriffseinheit (8) gezielt Zugriffe auf sein Feldgerät (1; 2; 3; 4) bzw. seine Feldbus-Adapter (7) einräumt, **dadurch gekennzeichnet, dass** hardwaremäßig ein Betätigungselement (14) aktiviert wird, wodurch ein externer Zugriff auf das Feldgerät (1; 2; 3; 4) bzw. die Feldbus-Adapter (7) innerhalb einer gewissen Zeitspanne möglich wird.

2. Verfahren nach Anspruch 1,
wobei verschiedene Varianten von Zugriffsberechtigungen vorgegeben sind und
wobei der Betreiber des Feldgeräts (1; 2; 3;4) bzw. des Feldbus -Adapters (7) unter den verschiedenen Varianten von Zugriffsberechtigungen auswählen kann, so daß der von dem Betreiber für das Feldgerät (1; 2; 3; 4) oder die Feldbus-Adapter (7) gewünschte Sicherheitsstandard gewährleistet ist.

3. Verfahren nach Anspruch 2,
wobei die jeweilige Zugriffsberechtigung hardwaremäßig und/oder softwaremäßig vergeben wird.

4. Verfahren nach Anspruch 2 oder 3,
wobei die Zugriffsberechtigungen zum Auslesen von Daten und/oder zum Konfigurieren und/oder Parametrieren des Feldgeräts (1; 2; 3; 4) bzw. der Vielzahl von Feldgeräten (1, 2, 3, 4) berechtigen.

5. Verfahren nach Anspruch 1,
wobei ein externer Zugriff auf das Feldgerät (1; 2; 3; 4) bzw. den Feldbus-Adapter (7) nur möglich ist, wenn über die externe Zugriffseinheit (8) ein vereinbartes Password genannt wird.

6. Verfahren nach Anspruch 1,
wobei ein externer Zugriff auf das Feldgerät (1; 2; 3; 4) bzw. den Feldbus-Adapter (7) nur möglich ist, wenn die externe Zugriffseinheit (8) eine vorgegebene IP-Adresse besitzt.

7. Verfahren nach Anspruch 1,
wobei ein externer Zugriff auf das Feldgerät (1; 2; 3; 4) bzw. den Feldbus-Adapter (7) nur möglich ist, wenn die externe Zugriffseinheit (8) einen vorgegebenes Verschlüsselungsverfahren verwendet.

8. Verfahren nach Anspruch 7, wobei als Verschlüsselungs-/Authentifizierungsverfahren das SSL-Verfahren eingesetzt wird.

9. Verfahren nach einem oder mehreren der vorhergehenden Ansprüche,
wobei die externe Zugriffseinheit (8) von dem Sevice-Personal oder von eine Kontrollbehörde bedient wird.

10. Verfahren nach Anspruch 9,
wobei es sich bei der Kontrollbehörde beispielsweise um den Zoll, das Finanzamt oder eine Umweltbehörde handelt.

11. Verfahren nach einem der vorhergehenden Ansprüche, wobei die IP-Adresse der Zugriffseinheit (8) abgespeichert wird.

## Claims

1. Process for securing data communication via WAN, LAN between at least one external access unit (8) and a field device (1; 2; 3; 4) for determining or monitoring at least one physical or chemical process variable, or between at least one remote access unit (8) and a fieldbus adapter (7) for data collection/control of a number of field devices (1, 2, 3, 4) which are used to determine or monitor at least one physical or chemical process variable,
where the operators of the field device (1; 2; 3; 4) or the fieldbus adapter grant the external access unit (8) specific access to their field device (1; 2; 3; 4) or fieldbus adapters (7), **characterized in that** a hardware-based operation element (14) is activated, thereby facilitating external access to the field device (1; 2; 3; 4) or the field bus adapters (7) within a specific timeframe.

2. Process as per Claim 1, **characterized in that** various access authorization versions are specified and the operator of the field device (1; 2; 3; 4) or the fieldbus adapter (7) can choose from the various access authorization versions to ensure the security standard the operator requires for the field device (1; 2; 3; 4) or the fieldbus adapters (7).

3. Process as per Claim 2, **characterized in that** access authorization is assigned via the hardware and/or software.

4. Process as per Claim 2 or 3, **characterized in that** access authorization provides authorization to read out data and/or to configure the field device (1; 2; 3; 4) or a number of field devices (1; 2; 3; 4).

5. Process as per Claim 1, **characterized in that** external access to the field device (1; 2; 3; 4) or the field bus adapter (7) is only possible if an agreed password is specified via the external access unit (8).

6. Process as per Claim 1, **characterized in that** external access to the field device (1; 2; 3; 4) or the field bus adapter (7) is only possible if the external access unit (8) has a specified IP address.

7. Process as per Claim 1, **characterized in that** external access to the field device (1; 2; 3; 4) or the field bus adapter (7) is only possible if the external access unit (8) uses a specified encryption method.

8. Process as per Claim 7, **characterized in that** SSL is the encryption/authentication method used.

9. Process as per one or more of the previous Claims, **characterized in that** the external access unit (8) is operated by service staff or a regulatory body.

10. Process as per Claim 9 **characterized in that** the regulatory body could be customs, the tax office or an environmental body.

11. Process as per one of the previous Claims **characterized in that** the IP address of the access unit (8) is saved.

## Revendications

1. Procédé destiné à la protection de la communication de données via WAN, LAN, entre au moins une unité d'accès (8) externe et un appareil de terrain (1, 2, 3, 4), destiné à la détermination ou la surveillance d'au moins une grandeur process physique ou chimique, ou entre au moins une unité d'accès (8) distante et un adaptateur de bus de terrain (7) destiné à l'acquisition de données / la commande d'un grand nombre d'appareils de terrain (1, 2, 3, 4), qui servent à la détermination ou la surveillance d'au moins une grandeur process physique ou chimique,
l'exploitant de l'appareil de terrain (1, 2, 3, 4) ou de l'adaptateur de bus de terrain octroyant de façon ciblée à l'unité d'accès (8) externe des accès à son appareil de terrain (1, 2, 3, 4) ou à son adaptateur de bus de terrain (7), **caractérisé en qu'**un élément de commande (14) est activé par matériel, ce qui rend possible un accès externe à l'appareil de terrain (1, 2, 3, 4) ou à l'adaptateur de bus de terrain (7) au sein d'un intervalle de temps déterminé.

2. Procédé selon la revendication 1,
pour lequel différentes variantes d'autorisations d'accès sont prédéfinies et pour lequel l'exploitant de l'appareil de terrain (1, 2, 3, 4) ou de l'adaptateur de bus de terrain (7) peut choisir parmi les différentes variantes d'autorisations d'accès, afin que soit garanti le niveau de sécurité souhaité par l'exploitant pour l'appareil de terrain (1, 2, 3, 4) ou l'adaptateur de bus de terrain (7).

3. Procédé selon la revendication 2,
pour lequel l'autorisation d'accès respective est attribuée par matériel et/ou par logiciel.

4. Procédé selon la revendication 2 ou 3,
pour lequel les autorisations d'accès autorisent la lecture de données et/ou la configuration et/ou le paramétrage de l'appareil de terrain (1, 2, 3, 4) ou d'un grand nombre d'appareil de terrain (1, 2, 3, 4).

5. Procédé selon la revendication 1,
pour lequel un accès externe à l'appareil de terrain (1, 2, 3, 4) ou à l'adaptateur de bus de terrain (7) n'est possible que si un mot de passe convenu est entré par l'intermédiaire de l'unité d'accès (8) externe.

6. Procédé selon la revendication 1,
pour lequel un accès externe à l'appareil de terrain (1, 2, 3, 4) ou à l'adaptateur de bus de terrain (7) n'est possible que si l'unité d'accès (8) externe possède une adresse IP prédéfinie.

7. Procédé selon la revendication 1,
pour lequel un accès externe à l'appareil de terrain (1, 2, 3, 4) ou à l'adaptateur de bus de terrain (7) n'est possible que si l'unité d'accès (8) externe utilise un procédé de cryptage prédéfini.

8. Procédé selon la revendication 7,
pour lequel le procédé SSL est utilisé en tant que procédé de cryptage /d'authentification.

9. Procédé selon l'une ou plusieurs des revendications précédentes,
pour lequel l'unité d'accès (8) externe est utilisée par le personnel de service ou par une autorité de contrôle.

10. Procédé selon la revendication 9,
pour lequel il s'agit, concernant l'autorité de contrôle, de la douane, du fisc ou d'une agence pour la protection de l'environnement.

11. Procédé selon l'une des revendications précédentes, l'adresse IP de l'unité d'accès (8) étant mémorisée.
